# EUROPEAN PATENT SPECIFICATION

(11) **EP 3 505 251 B1**
(45) Date of publication and mention of the grant of the patent: **17.08.2022**
(21) Application number: 18214696.9
(22) Date of filing: 20.12.2018
(51) Int. Cl.: B01L 3/00

(54) **MICROSCALE SAMPLING DEVICE**
MIKROSKALIGE PROBENAHMEVORRICHTUNG
DISPOSITIF D'ÉCHANTILLONNAGE À MICRO-ÉCHELLE

(30) Priority: 29.12.2017 CN 201711475242
(43) Date of publication of application: 03.07.2019
(73) Proprietor: Delta Electronics, Inc., Taoyuan County 33341 (TW)
(72) Inventor: HUANG, Song-Bin, 33341 Taoyuan City (TW); CHUNG, Wei-Yu, 33341 Taoyuan City (TW); LIU, Shing-Lun, 33341 Taoyuan City (TW); LIANG, Qian, 33341 Taoyuan City (TW); KAO, Yu-Kai, 33341 Taoyuan City (TW)
(74) Representative: 2K Patentanwälte Blasberg Kewitz & Reichel

(56) References cited:
- WO-A1-03/089565
- US-A1- 2008 190 220
- US-A1- 2008 213 755
- US-A1- 2011 003 286
- US-A1- 2013 302 809
- US-A1- 2014 352 410

## Description

### TECHNICAL FIELD

The present invention relates to a sampling device, and in particular to a microscale sampling device for microscale sampling.

### BACKGROUND

A conventional automatic biological testing equipment is used for taking a specific quantity of target sample from a specific sample reservoir and transferring to another reaction chamber. This sampling process is one of the most important processes of the whole biochemical reactions. Usually, a conventional large equipment performs the aforementioned sampling process by a three-axis robot with a pipettor. However, the large equipment cannot be used on POCT (Point of Care Testing) because of its size, and its sampling chamber and transferring route for the sample are open. Therefore, the sample might be contaminated, and the test results might perform pseudo-positive or pseudo-negative.

A conventional micro channel sampling device is used for accurately sampling a specific quantity of sample for dispensing, and is divided to two types: electrical control type and physical control type. The electric control sampling device is suitable for detecting a sample containing polarizable liquid or particles, the sample is polarized to produce electrophoretic or dielectrophoretic forces, and a specific quantity of sample thereby could be taken accurately. The electric control sampling device is usually applied to electrophoresis analysis of DNA or RNA. However, the sample should withstand serious electric field change and should be polarizable, and the electric control sampling device is therefore only applied to specific types of sample. Furthermore, components of the sample for the electrical control programs process should be accurately controlled. However, component proportion of clinical samples are difficult to be accurately controlled and therefore unsuitable for the electric control sampling device.

The physical control sampling device is able to accurately take a specific quantity of sample by mechanical structure (pipe) and physical control (gas driving or mechanical driving). The physical control sampling devices are commonly used sampling devices. However, the physical control sampling device only operates single sampling and dispensing process at the same time and therefore unsuitable for group sampling.

US2008190220 A1 discloses a microfluidic sample holder has at least one sample receiving compartment for a sample fluid, at least one distributor channel which is linked with at least one sample receiving compartment, at least one distributor channel extending from every sample receiving compartment, at least one reaction chamber to which optionally one inlet channel branched off from the at least one distributor channel leads, and at least one vent opening for every reaction chamber. The sample holders are mainly used in microbiological diagnostics, immunology, PCR, clinical chemistry, microanalytics and/or the inspection of active substances. Methods for analyzing a sample substance using the sample holder and to kits including the sample holder as also included.

US2008213755 A1 a device and method for real-time amplification and detection of a large number of target nucleic acids contained in a large number of biological samples is provided. The device can comprise a substrate and an optically transparent cover, wherein the substrate can comprise a first surface, at least one sample receiving chamber, a distributor channel, at least one reaction chamber, and a vent for each reaction chamber.

US2011003286 A1 discloses a reactor plate which prevents the entry of foreign matter from the outside and the pollution of a surrounding environment. A reactor plate includes a reaction well, a reaction well channel connected to the reaction well, and reaction well air vent channels and connected to the reaction well. The reaction well channel has a main channel, a metering channel branched off the main channel, and an injection channel of which one end is connected to the metering channel and the other end is connected to the reaction well. The main channel and the reaction well air vent channel can be hermetically sealed. The injection channel is formed narrower than the metering channel not so as to allow the passage of a liquid at a liquid introduction pressure applied to introduce the liquid into the main channel and the metering channel and at a purge pressure applied to purge the liquid from the main channel but so as to allow the passage of the liquid at a pressure higher than the liquid introduction pressure and the purge pressure.

US2014/352410 A1 discloses a device for centrifugally driving liquid flow to sequentially dispense aliquots from a reservoir while the device rotates. Also disclosed is a method and system for analyzing a liquid to derive an indicator of sedimentation rate of the liquid using sequential aliquoting, using the disclosed device in some embodiments. A particular application is the analysis of blood samples, including sedimentation rate and hematocrit. US2013302809 A1 discloses a fluidic testing system that includes a plurality of test chambers, a plurality of inlet channels, and a fluidic network that connects the inlet channels to one or more other chambers. The plurality of test chambers are each characterized by a length and a hydraulic diameter. The length of each test chamber is aligned substantially parallel to a gravity vector. Each of the test chambers has only one opening disposed along the length of the corresponding test chamber. Additionally, each of the test chambers is coupled via its respective opening to only one of the plurality of inlet channels.

WO03089565 A1 relates to a micro fluid system comprising a substrate, at least two reservoirs and at least one channel which is integrated into the substrate connecting the two reservoirs, the outlet of at least one channel being arranged above the base surface of one reservoir.

In views of this, in order to solve the above disadvantage, the present inventor studied related technology and provided a reasonable and effective solution in the present invention.

### SUMMARY

The present invention relates to a self-driving sampling device according to the claims.

A sampling device including a frame is provided in the present invention, a sample container, a communicating channel and a resistance channel are defined in the frame. At least one sampling chamber is defined in the communicating channel. An end of the communicating channel is communicated with the sample container and the communicating channel is arranged below the sample container. An end of the resistance channel is communicated with the sampling chamber, and the other end of the resistance channel is communicated to an output joint. The resistance channel is shaped with at least one discontinuous shape change.

According to the sampling device of the present invention, the resistance channel is shaped with at least one discontinuous depth change, a discontinuous width change or a discontinuous corner. The resistance channel is arranged above the communicating channel.

According to the sampling device of the present invention, the other end of the communicating channel is communicated with a recycling chamber, the recycling chamber is communicated with a negative pressure source or outside environment. The sample container contains a liquid sample below a predetermined level, an inlet communicated with the communicating channel is defined on the recycling chamber, and the inlet is arranged above the predetermined level.

According to the sampling device of the present invention, the output joint is inserted in a tube, the tube is communicated to a negative pressure source or outside environment.

According to the sampling device of the present invention, a bypass channel is formed in the output joint. The output joint is inserted in a tube, the tube could be communicated to outside environment via the bypass channel, and the communicating channel is communicated to a positive pressure source. A docking plate is embedded with the frame, a docking channel is defined in the docking plate, and the docking channels is communicated between outside environment and the bypass channel.

The output joint is inserted in a tube, and the tube alternatively could be communicated to a negative pressure source via the bypass channel. A docking plate is embedded with the frame, a docking channel is defined in the docking plate, and the docking channels is communicated between the negative pressure source and the bypass channel.

The docking plate cover and close the resistance channel.

According to the sampling device of the present invention, multiple sampling chambers arranged along the communicating channel are defined in the communicating channel, and a plurality of resistance channels communicated with the respective sampling chambers are defined on the frame, each resistance channel communicated with the corresponding sampling chamber is not longer than another resistance channel communicated with another sampling chamber closer to the sample container.

According to the sampling device of the present invention, the liquid sample in the sample container could be driven to flow into the respective sampling chambers by the gravity thereof caused by a height shift between the sample container and the sampling chamber. Furthermore, the gravity of the liquid sample could be balanced by the resistances caused by the respective resistance channels communicated with the respective sampling chambers, and the demanded quantities of the liquid samples thereby could be reserved accurately in the respective sampling chamber. Therefore, an additional pressure source for driving the liquid sample in the sample container to flow into the sampling chamber is not necessary according to the sampling device of the present invention.

### BRIEF DESCRIPTION OF DRAWING

The present invention can be more fully understood by reading the following detailed description of the embodiment, with reference made to the accompanying drawings as follows:
Figs. 1 to 3 are perspective views showing the sampling device of the present invention.
Fig. 4 is an enlarged view showing the area A marked in Fig. 3.
Fig. 5 is a partial sectional view showing the sampling device of the present invention.
Fig. 6 is an enlarged view showing the area B marked in Fig. 5.
Figs. 7 to 12 are perspective views showing respective operated statuses of the sampling device of the present invention.
Fig. 13 to 14 are perspective views showing another operated status of the sampling device of the present invention.

### DETAILED DESCRIPTION

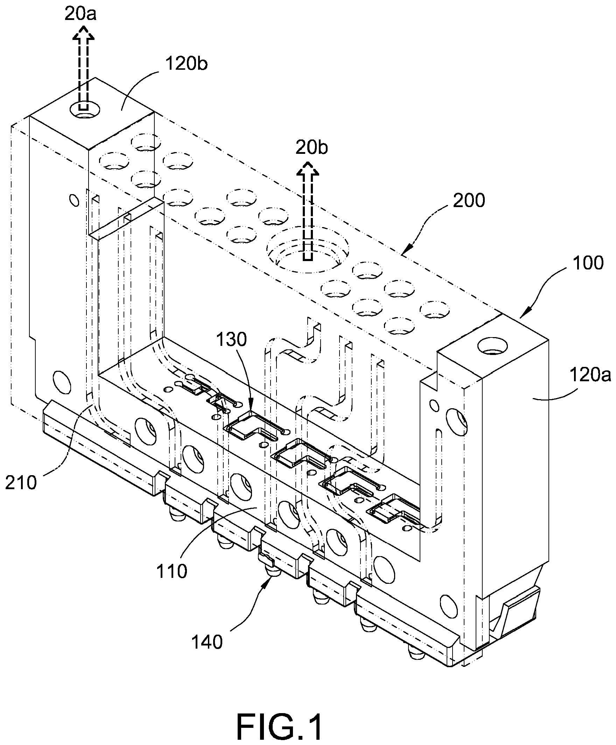

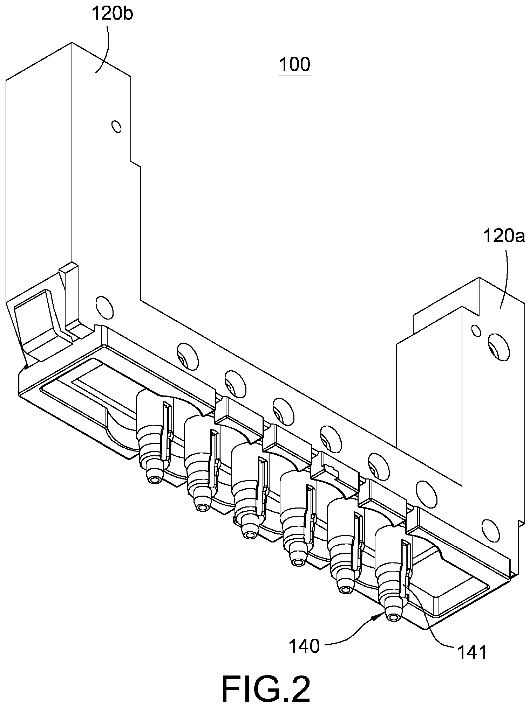

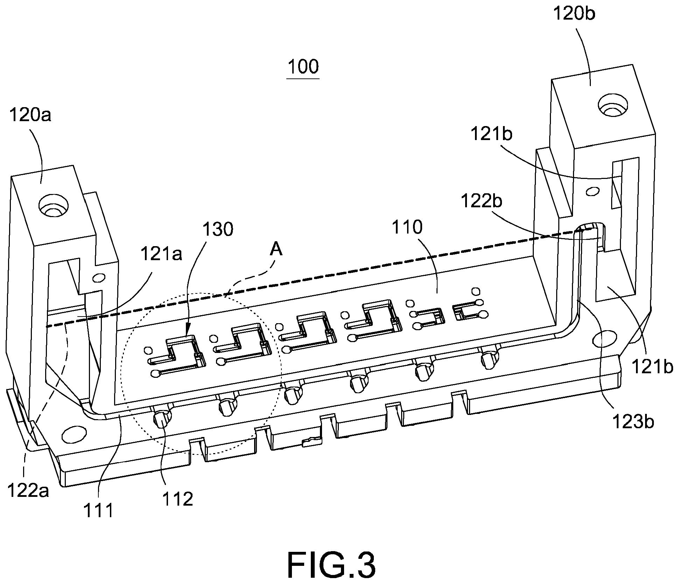

According to Figs. 1 to 3, a sampling device including a frame 100 and a docking plate 200 is provided in an embodiment of the present invention.

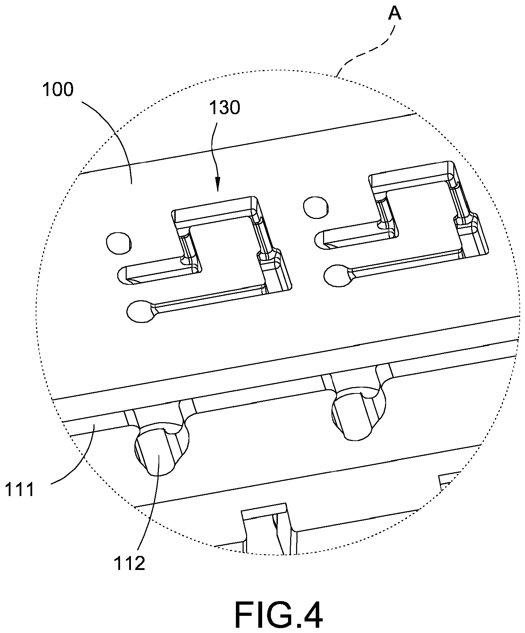

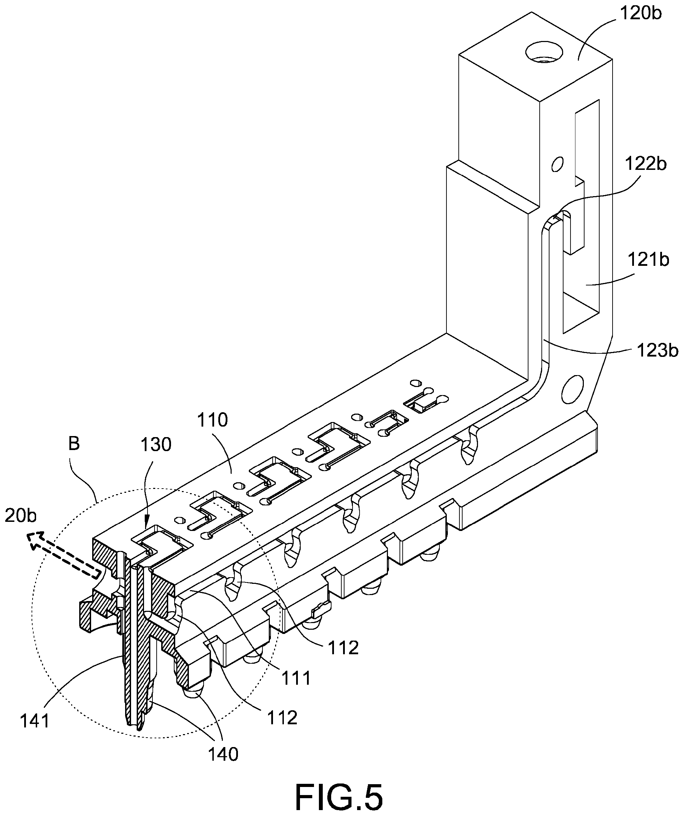

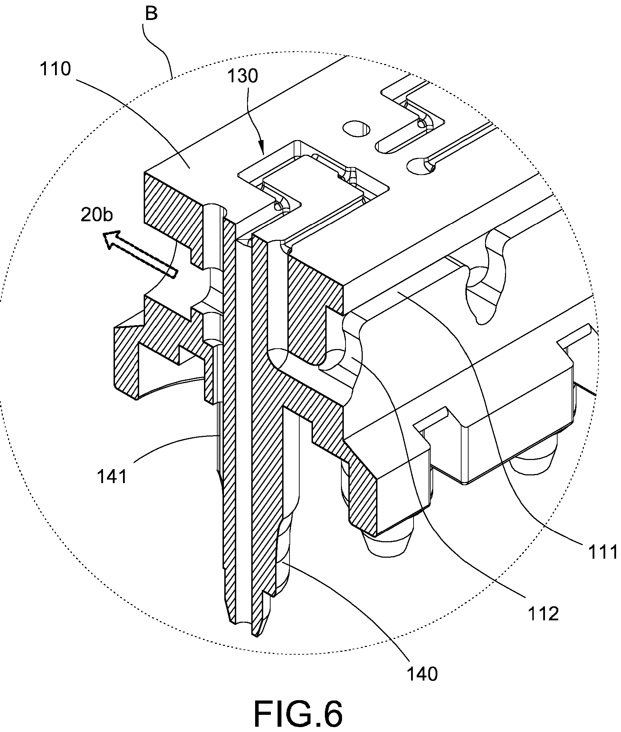

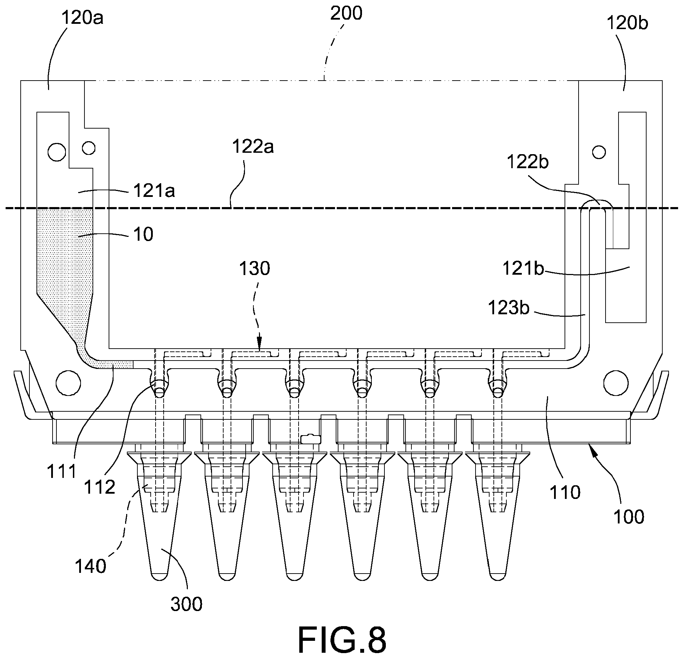

According to the present embodiment shown in Figs. 4 to 8, the frame 100 includes a horizontal beam 110 arranged horizontally and two columns 120a/120b upward extended from respective ends of the horizontal beam 110 and thereby upright arranged. One of the columns 120a of the frame 100 is hollow and a sample container 121a for containing a liquid sample 10 is thereby defined therein, and a level of the liquid sample 10 contained therein is below a predetermined level 122a. The other column 120b of the frame 100 is hollow and a recycling chamber 121b is thereby defined therein, and the recycling chamber 121b could communicated to a first negative pressure source 20a.

The communicating channel 111 is defined in the horizontal beam 110, and the communicating channel 111 is therefore arranged below the sample container 121a. The communicating channel 111 is extended along a longitudinal direction of the horizontal beam 110, an end of the communicating channel 111 is communicated to a bottom of the sample container 121a, the communicating channel 111 could extend horizontally or alternatively decline from the sample container 121a to the other end of the horizontal beam 110, and the communicating channel 111 other end of the horizontal beam 110 is communicated to a top of the recycling chamber 121b. An inlet 122b is defined on the top of the recycling chamber 121b, and the inlet 122b is arranged above the predetermined level 122a of the sample container 121a, a guiding channel 123b is further defined in the column 120b where the recycling chamber 121b is located, the guiding channel 123b is communicated between the communicating channel 111 and the inlet 122b of the recycling chamber 121b. Thereby, the liquid sample 10 in the sample container 121a cannot be driven to flow into the recycling chamber 121b by gravity thereof when the first negative pressure source 20a is invalid.

At least one sampling chamber 112 is formed by a branch extended from the communicating channel 111, according to the present embodiment, multiple sampling chambers 112 having the same basic structure and function are defined in the communicating channel 111, and the sampling chambers 112 are disposed along the communicating channel 111. Furthermore, the sampling chambers 112 are arranged below the communicating channel 111, and the liquid sample 10 contained in the sample container 121a can be driven by gravity thereof to flow into and fill the respective sampling chamber 112 through the communicating channel 111. Sizes of the respective sampling chambers 112 are configure according to sampling demands.

At least one resistance channel 130 is defined on the frame 100, multiple concave resistance channels 130 corresponding to the aforementioned respective the sampling chambers 112 are defined on a top of the horizontal beam 110 according to the present invention, the respective resistance channels 130 are separated and isolated from each other. An end of each resistance channel 130 is communicated to the corresponding sampling chamber 112, and the resistance channels 130 are disposed along the communicating channel 111 of the horizontal beam 110 corresponding to the sampling chambers 112. The respective resistance channels 130 are arranged above the communicating channel 111.

The other end of each resistance channel 130 is communicated to a corresponding output joint 140, according to the present embodiment, the respective output joints 140 are arranged downward protruding on a bottom of the horizontal beam 110. Moreover, each resistance channel 130 communicated with the corresponding sampling chamber 112 is not longer than another resistance channel 130 communicated with another sampling chamber 112 closer to the sample container 121a. The gravity of the liquid sample 10 is gradually balanced with flow resistances provided by the communicating channel 111 and the respective resistance channel 130 while flow through the communicating channel 111, shorter resistance channels 130 are accordingly disposed at lower reaches of the communicating channel 111 to provide smaller flow resistances, and the sampling chambers 112 at lower reaches of the communicating channel 111 are therefore ensured to be filled with the liquid sample 10.

Each resistance channel 130 is shaped with at least one discontinuous shape change. The aforementioned discontinuous shape change could be a discontinuous depth change, a discontinuous width change or a discontinuous corner, the liquid sample 10 in respective sampling chambers 112 are pressed by a flow resistance caused by the discontinuous shape change of the resistance channel 130 and the gravity caused by the liquid sample 10 contained in the sample container 121a is thereby balanced.

Each output joint 140 is inserted in a tube 300, the respective tubes 300 are communicated to a negative second pressure source 20b for taking out the liquid samples 10 in the respective sampling chambers 112. According to the present embodiment, a bypass channel 141 is defined at an external surface of each output joint 140. The bypass channel 141 could be a close channel or an open channel and is an open channel according to the present embodiment. An internal surface of the tube 300 close the bypass channel 141 to form a close channel when the tube 300 sleeves the output joint 140, and the tube 300 is communicated to the second negative pressure source 20b via the bypass channel 141.

According to Figs. 1 to 3, multiple docking channels 210 are defined in the docking plate 200, and the respective docking channels 210 are communicated between a second negative pressure source 20b and the bypass channel 141. According to the present embodiment, the docking plate 200 is embedded between the two columns 120a/120b and covers the horizontal beam 110, and the respective resistance channels 130 are covered thereby.

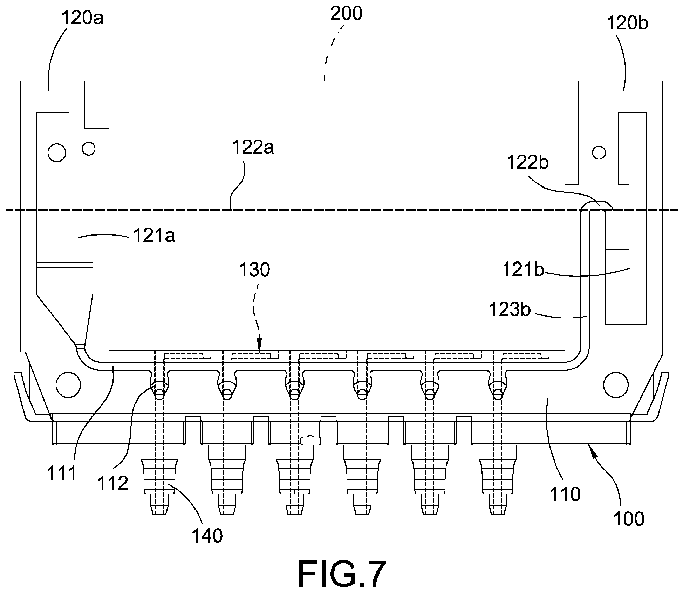

According to Figs. 7 to 9 showing the operation of the sampling device of the present invention, the liquid sample 10 is firstly inject into the sample container 121a, and the level of the liquid sample 10 is below the predetermined level 122a of the sample container 121a. Then, the liquid sample 10 contained in the sample container 121a is driven by the gravity thereof caused by a height shift between the sample container 121a and the communicating channel 111 to flow into the communicating channel 111 and flow toward the recycling chamber 121b along the communicating channel 111.

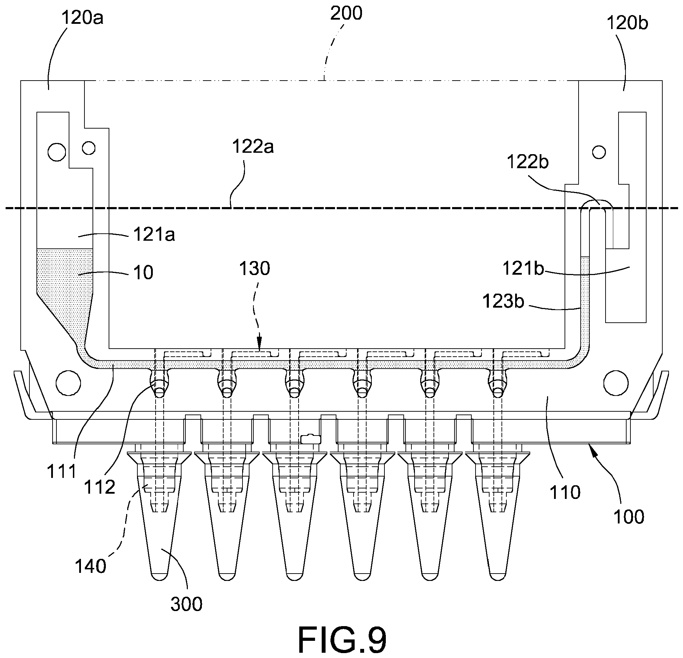

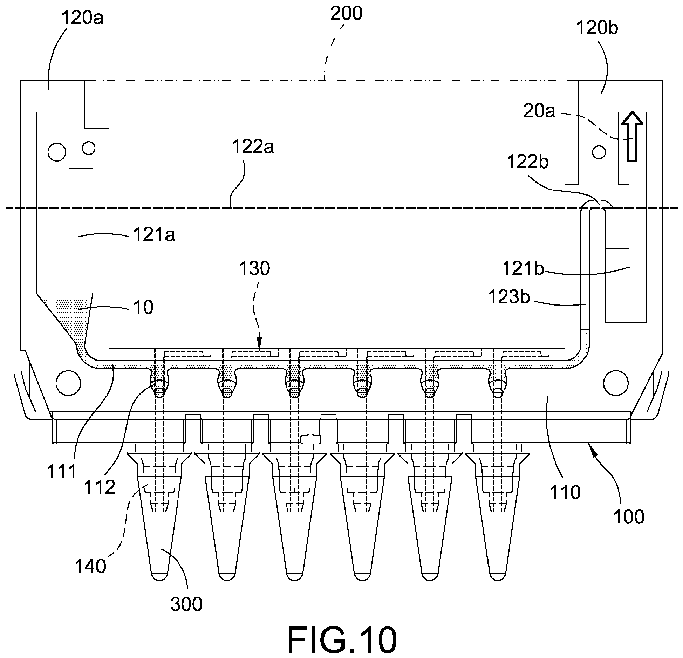

According to Figs. 9 and 10, the liquid sample 10 in the communicating channel 111 is driven by the gravity thereof caused by the height shift between the sample container 121a and the communicating channel 111 to flow into the respective sampling chambers 112, and the liquid samples 10 in the respective sampling chambers 112 are pressed by the flow resistances caused by the respective resistance channels 130, the gravity of the liquid sample 10 could be balanced thereby, and a demanded quantity of liquid sample 10 thereby could be reserved in each sampling chamber 112.

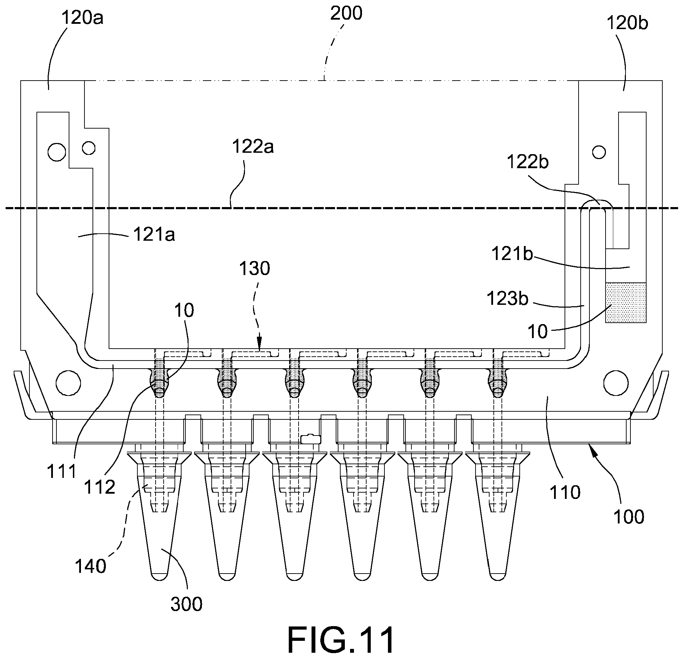

According to Figs. 10 and 11, the liquid sample 10 in the communicating channel 111 is driven to flow into the recycling chamber 121b by a pressure gradient between the two ends of the communicating channel 111 caused by the first negative pressure source 20a communicated to the recycling chamber 121b.

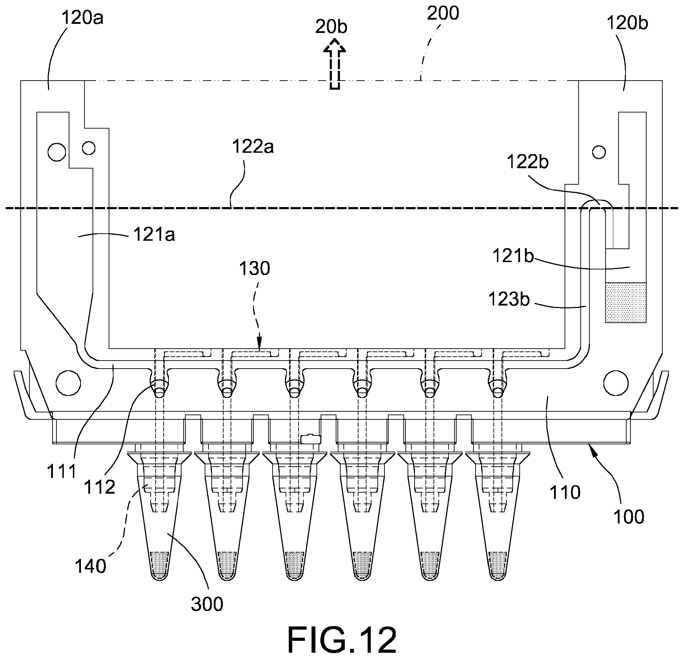

According to Figs. 12, the liquid samples 10 in the respective sampling chambers 112 are driven to flow into the respective tube 300 by the second negative pressure source 20b communicated with the respective tubes 300 and a sampling process is thereby completed.

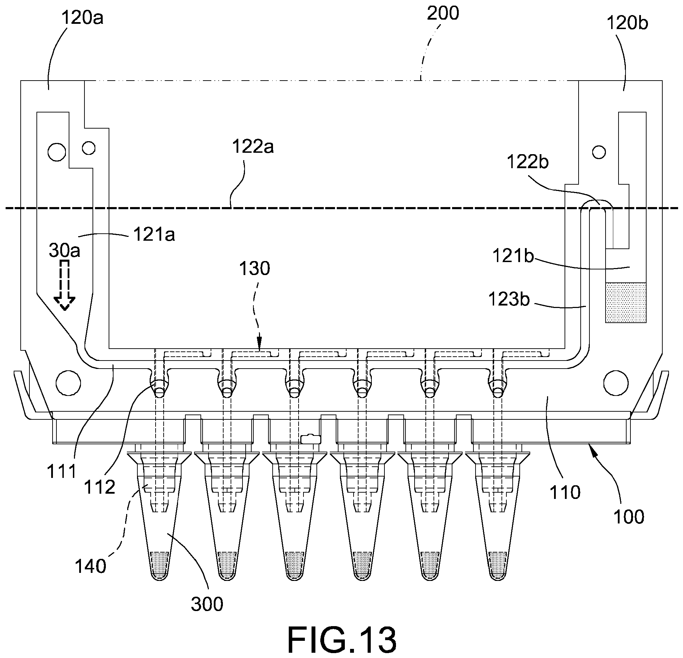

According to an alternative arrangement for outputting the liquid sample 10 shown in Fig. 13, the communicating channel 111 is communicated to a first positive pressure source 30a via the sample container 121a, and the respective bypass channels 141 of the respective output joints 140 are communicated to the outside environment. The tubes 300 are communicated to the outside environment via the bypass channels 141 and the docking channels 210 in the docking plate 200. The liquid samples 10 in the respective sampling chambers 112 are driven to flow into the respective tube 300 by the first positive pressure source 30a and a sampling process is thereby completed.

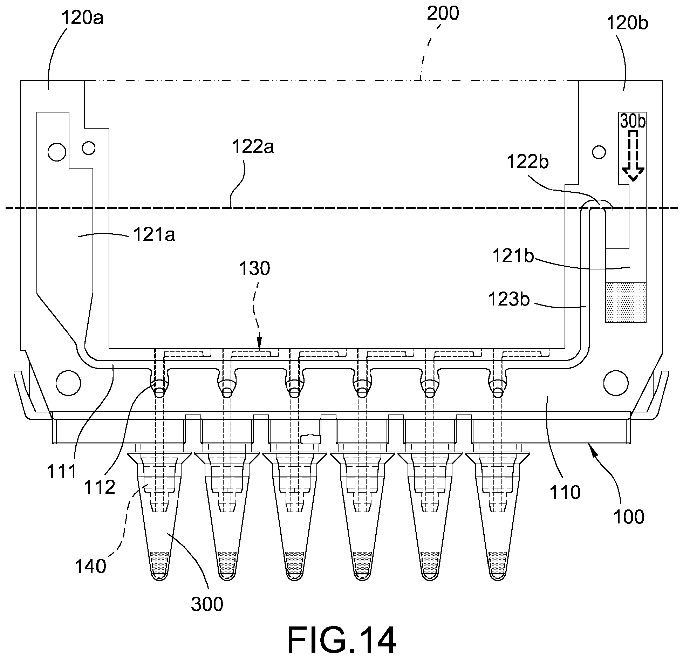

According to an alternative arrangement for outputting the liquid sample 10 shown in Fig. 14, the communicating channel 111 is communicated to a second positive pressure source 30b via the recycling chamber 121b, and the respective bypass channels 141 of the respective output joints 140 are communicated to the outside environment. The tubes 300 are communicated to the outside environment via the bypass channels 141 and the docking channels 210 in the docking plate 200. The liquid samples 10 in the respective sampling chambers 112 are driven to flow into the respective tube 300 by the first positive pressure source 30a and a sampling process is thereby completed.

According to the sampling device of the present invention, the liquid sample 10 in the sample container 121a could be driven to flow into the respective sampling chambers 112 by the gravity thereof caused by a height shift between the sample container 121a and the sampling chamber 112. Furthermore, the gravity of the liquid sample 10 could be balanced by the resistances caused by the respective resistance channels 130 communicated with the respective sampling chambers 112, and the demanded quantities of the liquid samples 10 thereby could be accurately reserved in the respective sampling chamber 112. Therefore, an additional pressure source for driving the liquid sample 10 in the sample container 121a to flow into the sampling chamber 112 is not necessary according to the sampling device of the present invention. According to the sampling device of the present invention, a pressure source is arranged only for recycling the remained liquid sample 10 and outputting the reserved liquid sample 10 rather than sampling, and the pressure source therefore should not be controlled accurately, structures of the sampling device therefore could be simplified.

## Claims

1. A sampling device for microscale sampling, comprising a frame (100), a sample container (121a), a communicating channel (111), a resistance channel (130) for causing a flow resistance all being defined in the frame (100), a docking plate (200) and a tube (300), wherein at least one sampling chamber (112) is defined in the communicating channel (111); an end of the communicating channel (111) is communicated with the sample container (121a) and the communicating channel (111) is arranged below the sample container (121a); an end of the resistance channel (130) is communicated with the sampling chamber (112); the other end of the resistance channel (130) is communicated to an output joint (140) suitable for being inserted in the tube (300), and the resistance channel (130) is shaped with at least one discontinuous shape change,
wherein the resistance channel (130) is shaped with at least one discontinuous depth change, discontinuous width change or discontinuous corner;
wherein a bypass channel (141) is formed in the output joint (140);
wherein the output joint (140) is inserted in the tube (300), and the communicating channel (111) is communicated to a first positive pressure source (30a);
the docking plate (200) is embedded with the frame (100), a docking channel (210) is defined in the docking plate (200);
wherein the docking channel (210) is communicated between outside environment and the bypass channel (141) so that the tube (300) is communicated to outside environment via the bypass channel (141) or the docking channel (210) is communicated between a second negative pressure source (20b) and the bypass channel (141) so that the tube (300) is communicated to the second negative pressure source (20b) via the bypass channel (141);
wherein the other end of the communicating channel (111) is communicated with a recycling chamber (121b), the sample container (121a) is thereby communicated with the recycling chamber (121b) and a height shift is formed between the sample container (121a) and the communicating channel (111), the recycling chamber (121b) is configured to be able to communicate with a first negative pressure source (20a) or outside environment;
and the resistance channel (130) is arranged above the communicating channel (111).

2. The sampling device for microscale sampling according to claim 1, wherein the sample container (121a) contains a liquid sample below a predetermined level (122a), an inlet (122b) communicated with the communicating channel (111) is defined on the recycling chamber (121b), and the inlet (122b) is arranged above the predetermined level (122a).

3. The sampling device for microscale sampling according to claim 1, wherein the docking plate (200) covers and seals the resistance channel (130).

4. The sampling device for microscale sampling according to claim 1, wherein a plurality of sampling chambers (112) arranged along the communicating channel (111) are defined in the communicating channel (111), and a plurality of resistance channels (130) communicated with the respective sampling chambers (112) are defined on the frame (100), each resistance channel (130) communicated with the corresponding sampling chamber (112) is not longer than another resistance channel (130) communicated with another sampling chamber (112) closer to the sample container (121a).

## Patentansprüche

1. Probenahmevorrichtung für eine Probenahme im Mikrobereich, die einen Rahmen (100), einen Probenbehälter (121a), einen Verbindungskanal (111), einen Widerstandskanal (130) zum Erzeugen eines Strömungswiderstands, die alle in dem Rahmen (100) definiert sind, eine Andockplatte (200) und ein Rohr (300) umfasst, wobei wenigstens eine Probenkammer (112) in dem Verbindungskanal (111) definiert ist; ein Ende des Verbindungskanals (111) mit dem Probenbehälter (121a) in Verbindung steht und der Verbindungskanal (111) unterhalb des Probenbehälters (121a) angeordnet ist; ein Ende des Widerstandskanals (130) mit der Probenkammer (112) in Verbindung steht; das andere Ende des Widerstandskanals (130) mit einer Ausgangsverbindung (140) in Verbindung steht, die geeignet ist, in das Rohr (300) eingeführt zu werden, und der Widerstandskanal (130) mit mindestens einer diskontinuierlichen Formänderung geformt ist,
wobei der Widerstandskanal (130) mit mindestens einer diskontinuierlichen Tiefenänderung, einer diskontinuierlichen Breitenänderung oder einer diskontinuierlichen Ecke geformt ist;
wobei in der Ausgangsverbindung (140) ein Bypass-Kanal (141) ausgebildet ist;
wobei die Ausgangsverbindung (140) in das Rohr (300) eingesetzt ist und der Verbindungskanal (111) mit einer ersten Überdruckquelle (30a) in Verbindung steht;
die Andockplatte (200) in den Rahmen (100) eingebettet ist, in der Andockplatte (200) ist ein Andockkanal (210) definiert;
wobei der Andockkanal (210) zwischen der äußeren Umgebung und dem Bypass-Kanal (141) verbunden ist, so dass das Rohr (300) über den Bypass-Kanal (141) mit der äußeren Umgebung verbunden ist, oder der Andockkanal (210) zwischen einer zweiten Unterdruckquelle (20b) und dem Bypass-Kanal (141) verbunden ist, so dass das Rohr (300) über den Bypass-Kanal (141) mit der zweiten Unterdruckquelle (20b) verbunden ist;
wobei das andere Ende des Verbindungskanals (111) mit einer Wiederverwertungskammer (121b) in Verbindung steht, der Probenbehälter (121a) dadurch mit der Wiederverwertungskammer (121b) in Verbindung steht und eine Höhenverschiebung zwischen dem Probenbehälter (121a) und dem Verbindungskanal (111) gebildet wird, die Wiederverwertungskammer (121b) so konfiguriert ist, dass sie mit einer ersten Unterdruckquelle (20a) oder der äußeren Umgebung in Verbindung stehen kann;
und der Widerstandskanal (130) ist oberhalb des Kommunikationskanals (111) angeordnet.

2. Die Probenahmevorrichtung für die Probenahme im Mikrobereich nach Anspruch 1, wobei der Probenbehälter (121a) eine flüssige Probe unterhalb eines vorbestimmten Niveaus (122a) enthält, ein Einlass (122b), der mit dem Verbindungskanal (111) in Verbindung steht, an der Wiederverwertungskammer (121b) definiert ist und der Einlass (122b) oberhalb des vorbestimmten Niveaus (122a) angeordnet ist.

3. Die Probenahmevorrichtung für die Probenahme im Mikrobereich nach Anspruch 1, wobei die Andockplatte (200) den Widerstandskanal (130) abdeckt und verschließt.

4. Die Probenahmevorrichtung für die Probenahme im Mikrobereich nach Anspruch 1, wobei eine Vielzahl von Probenkammern (112), die entlang des Verbindungskanals (111) angeordnet sind, in dem Verbindungskanal (111) definiert sind, und eine Vielzahl von Widerstandskanälen (130), die mit den jeweiligen Probenkammern (112) in Verbindung stehen, auf dem Rahmen (100) definiert sind, wobei jeder Widerstandskanal (130), der mit der entsprechenden Probenkammer (112) in Verbindung steht, nicht länger ist als ein anderer Widerstandskanal (130), der mit einer anderen Probenkammer (112) in Verbindung steht, die näher am Probenbehälter (121a) liegt.

## Revendications

1. Un dispositif d'échantillonnage à micro-échelle, comprenant un cadre (100), un conteneur d'échantillon (121a), un canal de communication (111), un canal de résistance (130) pour provoquer une résistance de charge définie dans le cadre (100), une plaque d'accueil (200) et un tube (300), dans lequel au moins une chambre d'échantillonnage (112) est définie dans le canal de communication (111); une extrémité du canal de communication (111) étant en communication avec le conteneur d'échantillon (121a) et le canal de communication (111) est agencé sous le conteneur d'échantillon (121a) ; une extrémité du canal de résistance (130) est en communication avec la chambre d'échantillonnage (112) ; l'autre extrémité du canal de résistance (130) communique avec un joint de sortie (140) adapté pour être inséré dans le tube (300), et le canal de résistance (130) est formé avec au moins un changement de forme discontinu.
dans lequel le canal de résistance (130) est formé avec au moins un changement de profondeur discontinu, un changement de largeur discontinu ou un coin discontinu.
dans lequel un canal de dérivation (141) est formé dans le joint de sortie (140) ;
dans lequel le joint de sortie (140) est inséré dans le tube (300), et le canal de communication (111) communique avec une première source de pression positive (30a) ;
la plaque d'accueil (200) est encastrée dans le cadre (100), un canal d'accueil (210) est défini dans la plaque d'accueil (200),
dans lequel le canal d'accueil (210) est mis en communication entre l'environnement extérieur et le canal de dérivation (141) de telle sorte que le tube (300) communique avec l'environnement extérieur via le canal de dérivation (141) ou le canal de dérivation (210) communique entre une seconde source de pression négative (20b) et le canal de dérivation (141) de sorte que le tube (300) communique avec la seconde source de pression négative (20b) via le canal de dérivation (141) ;
dans lequel l'autre extrémité du canal de communication (111) est en communication avec une chambre de recyclage (121b), le conteneur d'échantillon (121a) communique ainsi avec la chambre de recyclage (121b) et un décalage de hauteur est formé entre le conteneur d'échantillon (121a) et le canal de communication (111), la chambre de recyclage (121b) étant configurée pour être en communication avec une première source de pression négative (20a) ou l'environnement extérieur ;
et le canal de résistance (130) est disposé au-dessus du canal de communication (111).

2. Le dispositif d'échantillonnage à micro-échelle selon la revendication 1, dans lequel le conteneur d'échantillon (121a) contient un échantillon liquide en dessous d'un niveau prédéterminé (122a), une entrée (122b) communiquant avec le canal de communication (111) est définie sur la chambre de recyclage (121b), et l'entrée (122b) est agencée au-dessus du niveau prédéterminé (122a).

3. Le dispositif d'échantillonnage à micro-échelle selon la revendication 1, dans lequel plaque d'accueil (200) recouvre et ferme le canal de résistance (130).

4. Le dispositif d'échantillonnage à micro-échelle selon la revendication 1, dans lequel une pluralité de chambres d'échantillonnage (112) agencées le long du canal de communication (111) sont définies dans le canal de communication (111), et une pluralité de canaux de résistance (130) communiquent avec des chambres d'échantillonnage respectives (112) sont définies sur le cadre (100), chaque canal de résistance (130) communiquant avec la chambre d'échantillonnage correspondante (112) n'est pas plus long qu'un autre canal de résistance (130) communiquant avec une autre chambre d'échantillonnage (112) plus proche du conteneur d'échantillon (121a).
